# EUROPEAN PATENT APPLICATION

(11) **EP 3 477 556 A1**
(43) Date of publication of application: **01.05.2019**
(21) Application number: 18203633.5
(22) Date of filing: 31.10.2018
(51) Int. Cl.: G06N 3/063

(54) **METHOD AND APPARATUS FOR PERFORMING OPERATIONS IN CONVOLUTIONAL NEURAL NETWORK**

(30) Priority: 31.10.2017 CN 201711041806
(71) Applicant: Nanjing Horizon Robotics Technology Co., Ltd., 210046 Nanjing (CN)
(72) Inventor: LING, Kun, Beijing, Beijing 100080 (CN); HUANG, Chang, Beijing, Beijing 100080 (CN); CHEN, Liang, Beijing, Beijing 100080 (CN); LI, Delin, Beijing, Beijing 100080 (CN); LI, Jianjun, Beijing, Beijing 100080 (CN); ZHOU, Feng, Beijing, Beijing 100080 (CN)
(74) Representative: Sonn & Partner Patentanwälte

(57) **Abstract**

The present application relates to method and apparatus for performing operations in a convolutional neural network. In an embodiment, a method for performing operations in a convolutional neural network may comprise splitting a weight parameter of a selected layer in the convolutional neural network to obtain an operational parameter array including a plurality of operational parameters, performing operations in the selected layer by using each operational parameter in the operational parameter array to obtain a partial operational result array including a plurality of partial operational results, and generating one or more output data of the selected layer based on the partial operational result array. By this method, the convolutional neural network may achieve an improved execution efficiency.

## Description

### TECHNICAL FIELD OF THE DISCLOSURE

The present application generally relates to artificial convolutional neural networks, and more particularly, to a method and apparatus for performing operations in a convolutional neural network.

### BACKGROUND

Deep learning technologies based on convolutional neural network have been widely used in various fields such as image recognition, video analysis, natural language processing, auxiliary driving and the like.

A convolutional neural network may contain multiple layers. In each layer, a convolution operation of this layer is performed on an input data (also called as input feature data) for the layer using a weight parameter of the layer to obtain a corresponding output data (also called as activation value or output feature data).

In the convolutional neural network, each feature data may have a certain width and height, and may have one or more channels. Each channel may carry a kind of information of the feature data. The weight parameter of each layer may contain one or more kernels (also called as convolution kernels), and all of the kernels may have the same width, the same height, and the same depth (also called as number of channels). In other words, the weight parameter of each layer may have dimensions such as, for example, width, height, depth, and number of kernels.

It is desirable that operations in the convolutional neural network may be efficiently performed by using hardware such as a universal central processing unit (CPU) or graphics processing unit (GPU) or a dedicated accelerator, or the like. However, as a forward reasoning process proceeds in the convolutional neural network, the size of the weight parameter of each layer may become larger and larger. For example, it may have a greater number of channels and/or a greater number of kernels. If the weight parameter of a certain layer is too large to be completely buffered in a high-speed memory associated with a processor used to perform operations in the neural network (e.g., a cache within or associated with the processor), the operations of the layer cannot be performed correctly and/or efficiently.

### SUMMARY

An aspect of the present disclosure relates to a method for performing operations in a convolutional neural network, comprising: splitting a weight parameter of a selected layer in the convolutional neural network in at least one of dimension of depth and number of kernels to obtain an operational parameter array including a plurality of operational parameters, respective operational parameters in each row of the operational parameter array being from a same subset of a set of kernels of the weighted parameter and having different channels respectively, and respective operational parameters in each column of the operational parameter array being from different subsets of the set of kernels of the weight parameter respectively and having the same one or more channels; performing, by using each operational parameter in the operational parameter array, operations of the selected layer on data of input data for the selected layer that are in the channel corresponding to the channel of the operational parameter that is in use, to obtain a partial operation result array including a plurality of partial operation results; and generating one or more output data of the selected layer based on the partial operational result array.

Another aspect of the present disclosure relates to an apparatus for performing operations in a convolutional neural networks, comprising: one or more processors, and a memory having instructions stored therein, the instructions, when executed by the one or more processors, causing the one or more processors to perform: splitting a weight parameter of a selected layer in the convolutional neural network in at least one of dimension of depth and number of kernels to obtain an operational parameter array including a plurality of operational parameters, respective operational parameters in each row of the operational parameter array being from a same subset of a set of kernels of the weighted parameter and having different channels respectively, and respective operational parameters in each column of the operational parameter array being from different subsets of the set of kernels of the weight parameter respectively and having the same one or more channels; performing, by using each operational parameter in the operational parameter array, operations of the selected layer on data of input data for the selected layer that are in the channel corresponding to the channel of the operational parameter that is in use, to obtain a partial operation result array including a plurality of partial operation results; and generating one or more output data of the selected layer based on the partial operational result array.

Another aspect of the present disclosure relates to an apparatus for performing operations in a convolutional neural network, comprising: a splitter configured to split a weight parameter of a selected layer in the convolutional neural network in at least one of dimension of depth and number of kernels to obtain an operational parameter array including a plurality of operational parameters, respective operational parameters in each row of the operational parameter array being from a same subset of a set of kernels of the weighted parameter and having different channels respectively, and respective operational parameters in each column of the operational parameter array being from different subsets of the set of kernels of the weight parameter respectively and having the same one or more channels; an operator configured to perform, by using each operational parameter in the operational parameter array, operations of the selected layer on data of input data for the selected layer that are in the channel corresponding to the channel of the operational parameter that is in use, to obtain a partial operation result array including a plurality of partial operation results; and a generator configured to generate one or more output data of the selected layer based on the partial operational result array.

Another aspect of the present disclosure relates to a non-temporary storage medium having instructions stored thereon, the instructions, when executed by a processor that is configured to perform operations in a convolutional neural network, causing the processor to perform: splitting a weight parameter of a selected layer in the convolutional neural network in at least one of dimension of depth and number of kernels to obtain an operational parameter array including a plurality of operational parameters, respective operational parameters in each row of the operational parameter array being from a same subset of a set of kernels of the weighted parameter and having different channels respectively, and respective operational parameters in each column of the operational parameter array being from different subsets of the set of kernels of the weight parameter respectively and having the same one or more channels; performing, by using each operational parameter in the operational parameter array, operations of the selected layer on data of input data for the selected layer that are in the channel corresponding to the channel of the operational parameter that is in use, to obtain a partial operation result array including a plurality of partial operation results; and generating one or more output data of the selected layer based on the partial operational result array

With the method according to the embodiment of the present disclosure, operation efficiency or utilization of the hardware may be improved, and limitation of the hardware on the parameter size can also be avoided.

### BRIEF DESCRIPTION OF THE DRAWINGS

FIG. 1 shows a flow chart of an exemplary method according to an embodiment of the present disclosure.
FIG. 2 shows an example of a weight parameter and a corresponding array representation according to an embodiment of the present disclosure.
FIG. 3 shows an exemplary manner of splitting a weight parameter according to an embodiment of the present disclosure.
FIG. 4 shows an example of splitting a weight parameter according to an input data according to an embodiment of the present disclosure.
FIG. 5 shows an example of performing operations using split operational parameters according to an embodiment of the present disclosure.
FIG. 6 shows an example of generating an output data according to an embodiment of the present disclosure.
FIG. 7 shows an example of generating an output data according to an embodiment of the present disclosure.
FIG. 8 shows an example of generating an output data according to an embodiment of the present disclosure.
FIG. 9 shows an example of generating an output data according to an embodiment of the present disclosure.
FIG. 10 shows an example of generating an output data according to an embodiment of the present disclosure.
FIG. 11 shows a block diagram of an apparatus for implementing the method according to the embodiment of the present disclosure, according to an embodiment of the present disclosure.
FIG. 12 shows a block diagram of an apparatus for implementing the method according to the embodiment of the present disclosure, according to an embodiment of the present disclosure.

### DETAILED DESCRIPTION

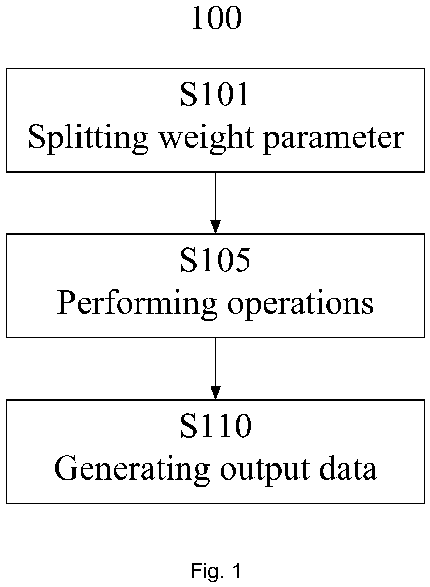

FIG. 1 shows a flow chart of an exemplary method according to an embodiment of the present disclosure. As shown in FIG. 1, for a selected layer in a convolutional neural network, in a step S101, a weight parameter of the selected layer in the convolutional neural network is split in at least one of dimensions of depth and number of kernels to obtain an operational parameter array containing a plurality of operational parameters. Then, in a step S105, each operational parameter in the operational parameter array obtained in the step S101 is used to perform operations of the selected layer on data in the input data for the selected layer in a channel corresponding to the channel of the operational parameter in use, to obtain a partial operation result array including a plurality of partial operation results. Then, in a step S110, one or more output data of the selected layer may be generated based on the partial operation result array obtained in the step S105.

In one embodiment, the operations to be performed in each layer of the convolution neural network, and the size and the magnitudes in respective dimensions of the weight parameter to be used in each layer may be determined or known in advance when the convolution neural network is designed, and a capacity of a high-speed memory for caching the weight parameters in respective layers or a capacity reserved in the high-speed memory for the weight parameter of each layer or for the weight parameters of multiple layers in executing the convolution neural network may be determined or known in advance, or in a case that arrangement of multipliers and adders in a hardware circuit for supporting multiply and add operations in the convolutional neural network is known, it may be determined or known in advance how many sets of kernel operations or how many sets of channel operations need to be processed simultaneously so as to obtain better or desirable hardware utilization or execution efficiency.

Thus, the weight parameters of which layers in the convolution neural network need to be split, or in other words, which layers in the convolutional neural network need to be selected as the selected layer in the step S101, may be determined in advance according to one or more aspects such as capacity of the high-speed memory, capacity in the high-speed memory reserved for the weight parameters, arrangement of multipliers and adders, requirement on operation parallelism, design of the convolution neural network, upper or lower limit of processes or threads for performing operations of the convolutional neural network, empirical data for certain application scenario(s) and the like.

In some other embodiments, it may be determined during operations of the convolutional neural network, for example, before actually performing operations of a certain intermediate layer, that the weight parameter of this layer needs to be split, according to one or more aspects such as capacity of the high-speed memory, capacity in the high-speed memory reserved for the weight parameter, capacity in the high-speed memory currently available for the weight parameter of this layer, arrangement of multipliers and adders, requirement on operation parallelism, design of the convolution neural network, current performance of the processor and/or the operating system and the like. If necessary, this layer may be deemed as the selected layer in the step S101.

In some other embodiments, it may also be determined during operations of the convolutional neural network, for example, before actually performing operations of a certain intermediate layer, of which layer(s) in a plurality of layers starting from the intermediate layer the weight parameter(s) needs to be split, and which layer(s) may be deemed as the selected layer, according to one or more aspects such as capacity of the high-speed memory, capacity in the high-speed memory reserved for the weight parameter(s), capacity in the high-speed memory currently available for the weight parameter(s) of the layer(s), arrangement of multipliers and adders, requirement on operation parallelism, design of the convolution neural network, current performance of the processor and/or the operating system and the like.

In some other embodiments, in the convolution neural network, usually one or more posterior layers have larger weight parameters, accordingly the one or more posterior layers in the convolutional neural network may be deemed as the selected layer in the step S101 during design of the convolutional neural network.

In some other embodiments, a certain layer of the convolutional neural network may be deemed as the selected layer in the step S101 if it receives a plurality of partial input data which collectively constitute a complete input data, and any two of the partial input data do not share a same channel, or in other words, an input feature data is split in the depth direction into a plurality of partial input data and the plurality of partial input data are respectively provided to the layer.

In some other embodiments, the weight parameter of each layer in the convolutional neural network may be split without any advance or real-time determination as described above. In other words, each layer in the convolutional neural network may be deemed as the selected layer in the step S101.

Further, it may be in the step S101 to determine whether a certain layer(s) in the convolutional neural network may be deemed as the selected layer.

In order to keep operation results consistent with or without the splitting, the weight parameter of the selected layer may be split in at least one of dimensions of depth (i.e., the channel direction) and number of kernels. If a weight parameter is considered as an array in a dimension of depth and a dimension of number of kernels, in which each row corresponds to a different channel of each kernel and each column corresponds to a part of respective kernels in the same channel, splitting the weight parameter of the selected layer in at least one of dimension of depth and number of kernels may be considered as dividing this array into several parts in the row direction and/or in the column direction.

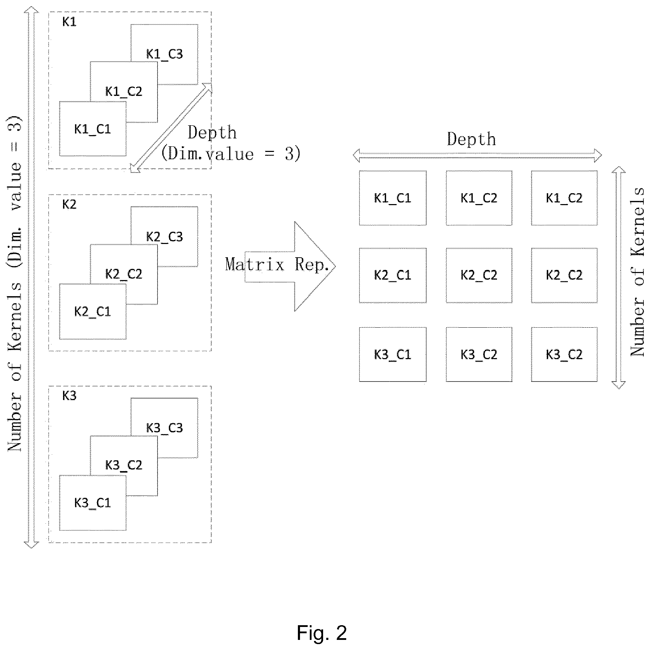

FIG. 2 shows an example of a weight parameter and a corresponding array representation according to an embodiment of the present disclosure.

A weight parameter having three kernels K1 to K3 is shown on the left side of the arrow in FIG. 2, and each kernel (K1 or K2 or K3) has three channels C1 to C3. The three channels of the kernel K1 are represented as K1_C1, K1_C2 and K1_C3, respectively, the three channels of the kernel K2 are represented as K2_C1, K2_C2 and K2_C3, respectively, and the three channels of the kernel K3 are represented as K3_C1, K3_C2 and K3_C3, respectively.

An array representation in two dimensions of depth and number of kernels, is shown on the right side of the arrow in FIG. 2. The array has three rows and three columns. The three channels K1_C1, K1_C2 and K1_C3 of the kernel K1 correspond to the first row of the array, the three channels K2_C1, K2_C2 and K2_C3 of the kernel K2 correspond to the second row of the array, and the three channels K3_C1, K3_C2 and K3_C3 of the kernel K3 correspond to the third row of the array. The parts K1_C1, K2_C1, and K3_C1 of the kernels K1 to K3 corresponding to the channel C1 correspond to the first column of the array, the parts K1_C2, K2_C2, and K3_C2 of the kernels K1 to K3 corresponding to the channel C2 correspond to the second column of the array, and the parts K1_C3, K2_C3, and K3_C3 of the kernels K1 to K3 corresponding to the channel C3 correspond to the third column of the array.

It should be understood that the weight parameters in the convolutional neural network are not limited to the example shown in FIG. 2, but may have any number of kernels and any number of channels.

Thus, as described above, splitting the weight parameter of the selected layer in at least one of dimensions of depth and number of kernels may be considered as dividing the corresponding array in the row direction and/or in the column direction.

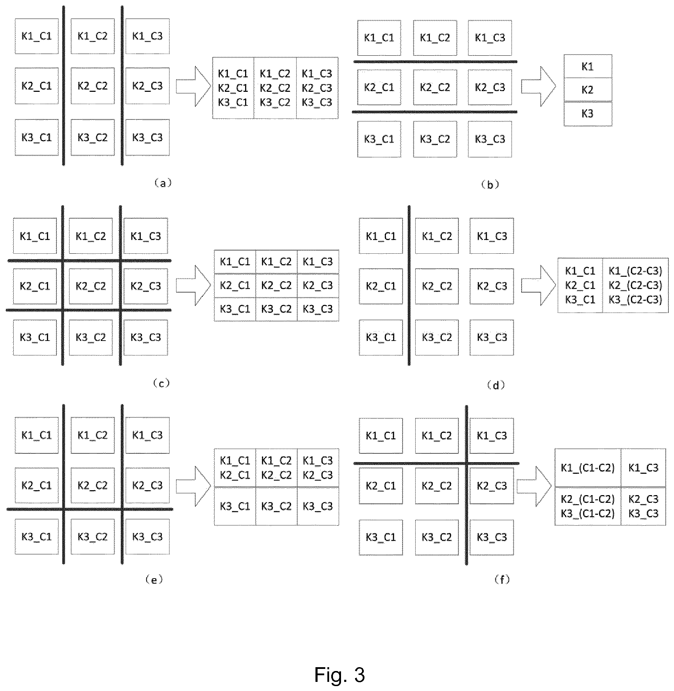

FIG. 3 shows an exemplary manner of splitting a weight parameter according to an embodiment of the present disclosure.

In an example, the array in FIG. 2 may be divided into three parts according to columns as shown in FIG. 3 (a) (i.e., the weight parameter is divided into three parts in the depth dimension), thus forming an array of operational parameters having one row and three columns, which includes three operational parameters corresponding respectively to the parts of the kernels K1 to K3 corresponding to the channel C1, the parts of the kernels K1 to K3 corresponding to the channel C2, and the parts of the kernels K1 to K3 corresponding to the channel C3.

In some other examples, the array in FIG. 2 may be divided into three parts according to rows as shown in FIG. 3 (b) (i.e., the weight parameter is divided into three parts in the dimension of kernel number), thus forming an array of operational parameters having three rows and one column, which includes three operational parameters corresponding respectively to the kernels K1 to K3.

In some other examples, the array in FIG. 2 may be divided into three rows and three columns as shown in FIG. 3 (c) (i.e., the weight parameter is divided in both dimensions of depth and kernel number into nine parts), thus forming an array of operational parameters having three rows and three columns, which includes nine operational parameters corresponding respectively to each channel of each kernel.

In some other examples, the array in FIG. 2 may be divided to form an array of operational parameters having one row and 2 columns as shown in FIG. 3 (d), (i.e., the weight parameter is divided into two parts in the depth dimension) which includes two operational parameters. The operational parameter in the first column corresponds to the parts of the kernels K1 to K3 in the channel C1 (represented as K1_C1, K2_C1, and K3_C1 in FIG. 3), and the operational parameter in the second column corresponds to the parts of the kernels K1 to K3 in the channels C1 and C2 (represented as K1_(C2-C3), K2_(C2-C3), and K3_(C2-C3) in FIG. 3).

In some other examples, the array in FIG. 2 may be divided to form an array of operational parameters having two rows and three columns as shown in FIG. 3 (e), (i.e., the weight parameter is divided in both dimensions of depth and kernel number into six parts) which includes six operational parameters. The operational parameters in the first row correspond respectively to the parts of the kernels K1 and K2 in the channels C1, C2 and C3, and the operational parameters in the second row correspond respectively to the parts of the kernel K3 in the channels C1, C2 and C3.

In some other examples, the array in FIG. 2 may be divided to form an array of operational parameters having two rows and two columns as shown in FIG. 3 (f), (i.e., the weight parameter is divided in both dimensions of depth and kernel number into four parts) which includes four operational parameters. The operational parameter in the first row and the first column corresponds to the parts of the kernel K1 in the channels C1 and C2 (represented as K1_(C1-C2) in FIG. 3), the operational parameter in the first row and the second column corresponds to the part of kernel K1 in the channel C3, the operational parameter in the first row and the second column corresponds to the parts of the kernels K2 and K3 in the channels C1 and C2 (represented as K2_(C1-C2) and K3_(C1-C2) in FIG. 3), and the operational parameter in the second row and the second column corresponds to the parts of the kernels K2 and K3 in the channel C3.

It should be understood that splitting of the weight parameter in at least one of dimensions of depth and kernel number is not limited to the examples shown in FIG. 3. The weight parameter may be split in any appropriate way in at least one of dimensions of depth and kernel number to obtain an array of operational parameters containing a plurality of operational parameters, such that respective operational parameters in each row of the operational parameter array are from the same subset of the set of kernels of the weight parameter and have different channels respectively, and respective operational parameters in each column of the operational parameter array are from different subsets of the set of kernels of the weight parameter respectively and have the same one or more channels.

As described above, in the step S101, it may be determined according to various criteria whether to split the weight parameter of the selected layer, and accordingly, it may also be determined according to such criteria whether the operational parameter array obtained by the splitting meets relevant requirements.

In an embodiment, in the step S101, the weight parameter may be split when the size thereof exceeds a first threshold, such that the size of each operational parameter in the operational parameter array obtained by the splitting may be less than or equal to the first threshold.

In an example, the first threshold may be set according to the capacity of the high-speed memory for caching the weight parameter or the capacity of the high-speed memory available for storing the weight parameter.

In some other examples, the first threshold may be set as 1/5, 1/2, 2/3 of the capacity of the high-speed memory, or the first threshold may be set to be equal to the capacity of the high-speed memory.

In some other examples, the first threshold may be set by the designer of the convolutional neural network in the design procedure of the convolutional neural network based on empirical or statistic data in combination with considerations relating to application scenarios of the convolutional neural network. For example, the first threshold may be set as 32 kb, 64 kb, 128 kb and the like.

It should be understood that the setting of the first threshold is not limited to examples as described above. The first threshold may be set as any suitable or desirable value if needed. Further, a first threshold may be set for the entire convolutional neural network and it may be applied to each layer; or first thresholds may be set for respective selected layers. Further, the first threshold may have a fixed value, or it may be updated in the forward reasoning process of the convolutional neural network according to conditions (e.g., performance, available resources, etc.) of the system (including hardware and/or software) and/or conditions of the learning (e.g., parameters of each layer in the convolutional neural network may also be dynamically adjusted by learning in the forward reasoning process).

In some other embodiments, in the step S101, the weight parameter may be split when the number of kernels of the weight parameter exceeds a second threshold, such that the number of kernels of each operational parameter in the operational parameter array obtained by the splitting may be less than or equal to the second threshold.

In an example, the second threshold may be set by the designer of the convolutional neural network in the design procedure of the convolutional neural network based on empirical or statistic data in combination with considerations relating to application scenarios of the convolutional neural network. For example, the second threshold may be set as 8 kb, 32 kb, 64 kb, and the like.

In some other examples, the second threshold may be set according to the capacity of the high-speed memory and the size of each kernel. For example, the second threshold may be set as a value less than or equal to a ratio of the capacity of the high-speed memory available for storing the weight parameter to the size of each kernel.

In some other examples, if it is determined based on parameters relating to hardware for supporting operations of the neural network that cost and performance of the software and/or hardware are relatively good in a case of N convolution kernels, for example, the selection/enabling circuit for the adders may be eliminated, or a relatively good parallel processing may be achieved, then the second threshold may be set as N. For example, assuming that the number of kernels of the weight parameter is K and the second threshold is N, the operational parameter array may be made to have K/N rows and each operational parameter in each row has N or less kernels, which may be beneficial to improve parallelism or resource utilization when performing operations for each operational parameter in a parallel mode.

It should be understood that the setting of the second threshold is not limited to the above examples. The second threshold may be set as any suitable or desirable value if needed. Further, a second threshold may be set for the entire convolutional neural network, and the second threshold may be applied to each layer; or second thresholds may be set for respective selected layers. Further, the second threshold may have a fixed value, or it may be updated in the forward reasoning process of the convolutional neural network according to conditions (e.g., performance, available resources, etc.) of the system (including hardware and/or software) and/or conditions of the learning (e.g., parameters of each layer in the convolutional neural network may also be dynamically adjusted by learning in the forward reasoning process).

In some other embodiments, in the step S101, the weight parameter may be split in a case where the number of kernels of the weight parameter is greater than or equal to a first predetermined number, such that the number of rows of the operational parameter array obtained by the splitting may be equal to a multiple of the first predetermined number.

In an example, the first predetermined number may be set according to the number of processors (such as CPU, GPU, or dedicated accelerator, etc.) or processor cores used to process the operations in the convolutional neural network.

In some other examples, the first predetermined number may be set according to a ratio of the capacity of the high-speed memory (for example, the total capacity or the capacity reserved for storing the weight parameter) to the size of the kernels of a certain weight parameter (for example, a weight parameter with the largest size or a weight parameter with the smallest size) in the convolutional neural network.

In some other examples, if it is determined based on parameters relating to hardware for supporting operations of the neural network that cost and performance of the software and/or hardware are relatively good in a case of N convolution kernels, for example, the selection/enabling circuit for the adders may be eliminated, or a relatively good parallel processing may be achieved, then the first predetermined number may be set as N. Such a setting may be beneficial to improve parallelism or resource utilization when performing operations for each operational parameter in a parallel mode.

It should be understood that the setting of the first predetermined number is not limited to the above examples. The first predetermined number may be set as any suitable or desirable value if needed. Further, a first predetermined number may be set for the entire convolutional neural network, and the first predetermined number may be applied to each layer; or first predetermined numbers may be set for respective selected layers. Further, the first predetermined number may have a fixed value, or it may be updated in the forward reasoning process of the convolutional neural network according to conditions (e.g., performance, available resources, etc.) of the system (including hardware and/or software) and/or conditions of the learning (e.g., parameters of each layer in the convolutional neural network may also be dynamically adjusted by learning in the forward reasoning process).

In some other embodiments, in the step S101, the weight parameter may be split in a case where the number of channels of the weight parameter exceeds a third threshold, such that each operational parameter in the operational parameter array obtained by the splitting has the third threshold or less channels.

In an example, the third threshold may be set by the designer of the convolutional neural network in the design procedure of the convolutional neural network based on empirical or statistic data in combination with considerations relating to application scenarios of the convolutional neural network. For example, the third threshold may be set as 8, 32, 64, and the like.

In some other examples, the third threshold may be set according to a ratio of the capacity of the high-speed memory (for example, the total capacity or the capacity reserved for storing the weight parameter) to a size within a single channel of a certain weight parameter (for example, a weight parameter with the largest size or a weight parameter with the smallest size) in the convolutional neural network.

In some other examples, the hardware circuit for supporting multiply and add operations of the neural network may include an arrangement of one or more groups of multipliers and adders, and the arrangement of each group of multipliers and adders may include one or more multipliers and one or more adders. If it is determined based on the arrangement of each group of multipliers and adders that when the weight parameter has a depth M, the multipliers and the adders have the highest (or relatively high) utilization and, for example, the design/arrangement of the selection/enabling circuit may be eliminated, then the third threshold may be set as M. For example, assuming that the weight parameter has a depth D and the third threshold is M, the operational parameter array may be made to have D/M columns and each operational parameter in each column has a depth less than or equal to M, which may be beneficial to improve parallelism or resource utilization when performing operations for each operational parameter in a parallel mode.

It should be understood that the setting the third threshold is not limited to the above examples. The third threshold may be set as any suitable or desirable value if needed. Further, a third threshold may be set for the entire convolutional neural network, and the third threshold may be applied to each layer; or third thresholds may be set for respective selected layers. Further, the third threshold may have a fixed value, or it may be updated in the forward reasoning process of the convolutional neural network according to conditions (e.g., performance, available resources, etc.) of the system (including hardware and/or software) and/or conditions of the learning (e.g., parameters of each layer in the convolutional neural network may also be dynamically adjusted by learning in the forward reasoning process).

In some other embodiments, in the step S101, the weight parameter may be split in a case where the number of channels of the weight parameter is greater than or equal to a second predetermined number, such that the number of columns of the operational parameter array obtained by the splitting may be equal to a multiple of the second predetermined number.

In an example, the second predetermined number may be set according to a number of processors (such as CPU, GPU, or dedicated accelerator, etc.) or processor cores used to process the operations in the convolutional neural network.

In some other examples, the second predetermined number may be set according to a ratio of the capacity of the high-speed memory (for example, the total capacity or the capacity reserved for storing the weight parameter) to a depth of a certain weight parameter (for example, a weight parameter with the largest size or a weight parameter with the smallest size) in the convolutional neural network.

In some other examples, the hardware circuit for supporting the multiply and add operations of the neural network may include an arrangement of one or more groups of multipliers and adders, and the arrangement of each group of multipliers and adders may include one or more multipliers and one or more adders. If it is determined based on the arrangement of each group of multipliers and adders that when the weight parameter has a depth M, the multipliers and the adders have the highest (or relatively high) utilization and, for example, the design/arrangement of the selection/enabling circuit may be eliminated, then the second predetermined number may be set as M. Such a setting may be beneficial to improve parallelism or resource utilization when performing operations for each operational parameter in a parallel mode.

It should be understood that the setting of the second predetermined number is not limited to the above examples. The second predetermined number may be set as any suitable or desirable value if needed. Further, a second predetermined number may be set for the entire convolutional neural network, and the second predetermined number may be applied to each layer; or second predetermined numbers may be set for respective selected layers. Further, the second predetermined number may have a fixed value, or it may be updated in the forward reasoning process of the convolutional neural network according to conditions (e.g., performance, available resources, etc.) of the system (including hardware and/or software) and/or conditions of the learning (e.g., parameters of each layer in the convolutional neural network may also be dynamically adjusted by learning in the forward reasoning process).

In some other embodiments, if a certain layer of the convolutional neural network receives a plurality of partial input data which collectively constitute a complete input data, and any two of the partial input data do not share a same channel, or in other words, an input feature data is split in the depth direction into a plurality of partial input data and the plurality of partial input data are respectively provided to the layer, then in the step S101, the weight parameter of this layer may be split according to each partial input data such that the operational parameter array obtained by the splitting has a number of columns equal to the number the received plurality of partial input data, and all the operational parameters in each column correspond to the same one or more channels as one of the received plurality of partial input data.

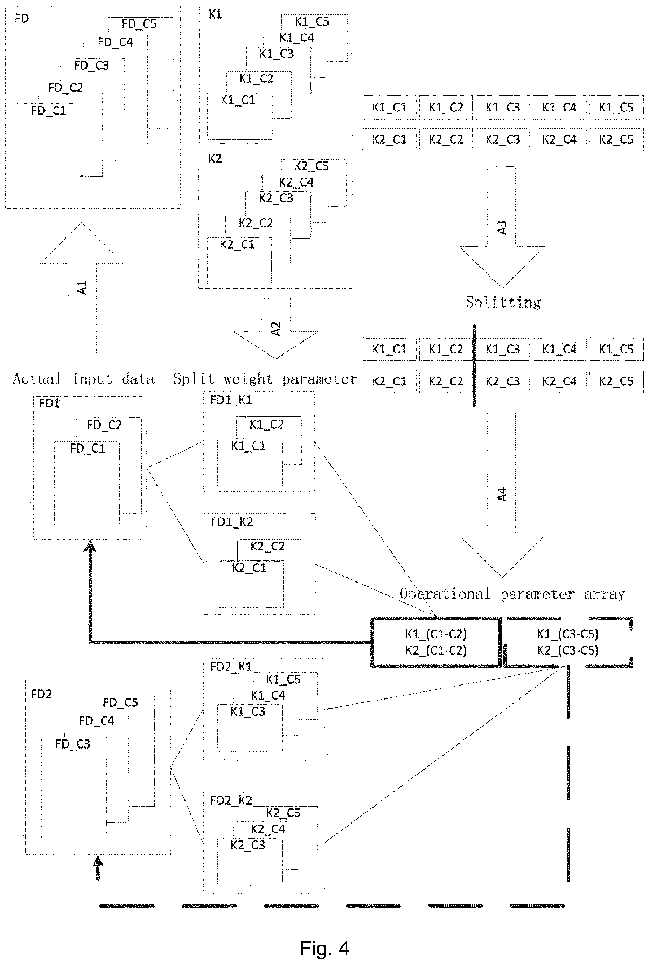

For example, as shown in FIG. 4, assume that two input data FD1 and FD2 are received at a certain layer in the convolutional neural network, and it may be determined that the input data FD1 and FD2 actually correspond to two parts of a complete feature data FD (as indicated by an arrow A1 in FIG. 4). The input data FD1 corresponds to a part of the feature data FD in channels C1 and C2 (shown as FD_C1 and FD_C2 in FIG. 4, respectively), and the input data FD2 corresponds to a part of the feature data FD in channels C3 to C5 (shown as FD_C3, FD_C4 and FD_C5 in FIG. 4, respectively). As described above, this layer may be used as the selected layer in the step S101, or the above determination may be performed and this layer may be taken as the selected layer in the step S101.

In such a case, the weight parameter including two kernels (K1 and K2) of this layer may be split (as indicated by an arrow A2 in FIG. 4) in the depth dimension into two parts according to the received input data FD1 and FD2, of which one corresponds to the input data FD1 and includes partial kernels FD1_K1 (including channels C1 and C2 of the kernel K1) and FD1_K2 (including channels C1 and C2 of the kernel K2), and the other corresponds to the input data FD2 and includes partial kernels FD2_K1 (including channels C3 to C5 of the kernel K1) and FD2_K2 (including channels C3 to C5 of the kernel K2). That is, an array corresponding to the weight parameter is vertically divided (as indicated by arrow A3 in FIG. 4) into two parts, thereby generating an operational parameter array (the part pointed to by an arrow A4 in FIG. 4) comprising one row and two columns (i.e., two operational parameters). The operational parameter in the first row and the first column corresponds to the same plurality of channels (i.e., C1 and C2) as the input data FD1, and the operational parameter in the first row and the second column corresponds to the same plurality of channels (i.e., C3 to C5) as the input data FD2.

In some other embodiments, in the step S101, whether to split the weight parameter may be determined according to a plurality of criteria, and the obtained array of operational parameters may simultaneously satisfy a plurality of conditions.

In one example, the weight parameter may be split such that each operational parameter in the obtained operational parameter array has a size less than or equal to a first threshold and includes a number of kernels less than or equal to a second threshold.

In some other examples, the weight parameter may be split such that the obtained operational parameter array has a number of rows equal to a multiple of a first predetermined number, and each operational parameter in the operational parameter arrays has a number of channels less than or equal to a third threshold.

In some other examples, the weight parameter may be split such that the obtained operational parameter array has a number of rows equal to a multiple of a first predetermined number and a number of columns equal to a multiple of a second predetermined number.

In some other examples, if the obtained operational parameter array includes an operational parameter having a size exceeding the first threshold, at least the row and/or column where the operational parameter having a size exceeding the first threshold locates may be subdivided in at least one of the dimensions of depth and number of kernels such that each operational parameter in the subdivided operational parameter array has a size less than or equal to the first threshold.

After obtaining the operational parameter array containing a plurality of operational parameters in the step S101, the method 100 may proceed to a step S105, in which each operational parameter in the obtained operational parameter array may be used respectively to perform operations of the selected layer on data in the input data for the selected layer that are in the channel(s) corresponding to the channel(s) of the operational parameter in use, resulting in a partial operation result array including a plurality of partial operation results.

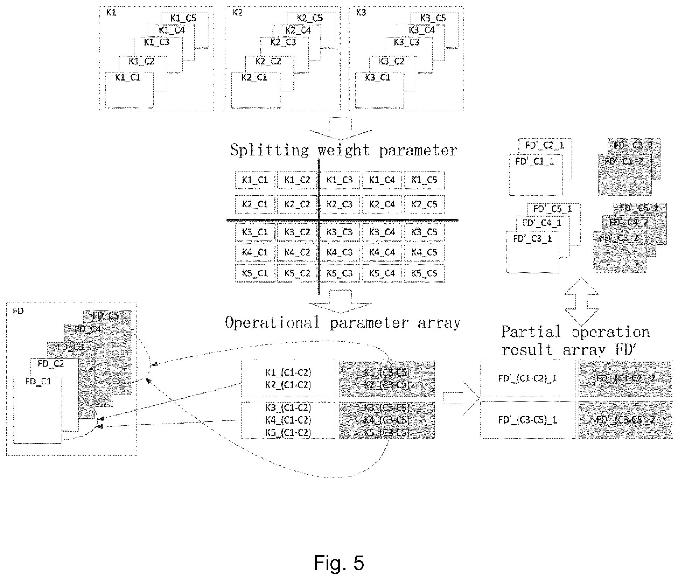

FIG. 5 shows an example of performing operations using split operational parameters according to an embodiment of the present disclosure. As shown in FIG. 5, assume that three kernels K1 to K3 are used to perform convolution operations on the input data FD, and the input data FD has five channels FD_C1 to FD_C5, and the kernels K1 to K3 each also have five channels, i.e., K1_C1 to K1_C5, K2_C1 to K2_C5, and K3_C1 to K3_C5, respectively.

Referring to FIG. 5, assume that the weight parameter is split into four parts in both dimensions of depth and number of kernels in the step S101, and thus an operational parameter array comprising two rows and two columns is obtained. The operational parameter in the first row and the first column of the operational parameter array corresponds to the parts of the kernels K1 and K2 in the channels C1 and C2, the operational parameter in the first row and the second column corresponds to the parts of the kernels K1 and K2 in the channels C3 to C5, the operational parameter in the second row and the first column corresponds to the parts of the kernels K3 to K5 in the channels C1 and C2, and the operational parameter in the second row and the second column corresponds to the parts of the kernels K3 to K5 in the channels C3 to C5.

In the step S105, the operational parameter in the first row and the first column of the operational parameter array is used to perform convolution operations on the parts of the input data FD in the channels C1 and C2, thereby generating a partial operation result FD'_(C1-C2)_1; the operational parameter in the first row and the second column of the operational parameter array is used to perform convolution operations on the parts of the input data FD in the channels C3 to C5, thereby generating a partial operation result FD'_(C3-C5)_1; the operational parameter in the second row and the first column of the operational parameter array is used to perform convolution operations on the parts of the input data FD in the channels C1 and C2, thereby generating a partial operation result FD'_(C1-C2)_2; and the operational parameter in the second row and the second column of the operational parameter array is used to perform convolution operations on the parts of the input data FD in the channels C3 to C5, thereby generating a partial operation result FD'_(C3-C5)_2.

As shown in FIG. 5, the generated four partial operation results may form a partial operation result array having two rows and two columns. The generated partial operation result array is shown below a bi-directional arrow in FIG. 5, and a more intuitive representation of each partial operational result in the partial operational result array is shown above the bi-directional arrows in FIG. 5.

FIG. 5 shows an example of a convolutional layer. However, the principles of the method according to embodiments of the present disclosure are also applicable to other types of layers in the convolutional neural network. For example, if the feature data FD in FIG. 5 serves as an input data for a residual layer, a weight parameter of the residual layer may be split in at least one of dimensions of depth and number of kernels in the step S101 to obtain an operational parameter array containing a plurality of operational parameters. Then, in the step S105, each operational parameter in the operational parameter array may be respectively used to perform operations on data in the input data for the residual layer that are in the channel(s) corresponding to the channel(s) of the operational parameter in use, including performing point-to-point add operations on partial results calculated by using each operational parameter and data in the input data in a corresponding channel(s). Thus, a partial operation result array including a plurality of partial operation results may be obtained.

The step S105 may be performed in series or in parallel for the operational parameters, or may be performed in parallel for a row or column of operational parameters.

After obtaining the partial operation result array, the method 100 may proceed to a step S110 to generate one or more output data based on the obtained partial operation result array. If the selected layer is a final output layer of the convolutional neural network, an output data may be generated based on the obtained partial operation result array as a final output of the entire convolutional neural network. If the selected layer is an input layer or an intermediate layer (hidden layer) of the convolutional neural network, the output data may be generated in any of the following ways as needed, and the generated output data may be provided to a next layer:

- providing each partial operation result in the partial operation result array to the next layer as the output data of the selected layer;

- generating an output data based on the obtained partial operation result array and providing the generated output data to the next layer; and

- combining some partial operation results in adjacent rows and/or columns in the partial operation result array so as to compress the partial operation result array into a partial operation result array having fewer rows and/or columns, and then providing each partial operation result in the compressed partial operation result array to the next layer as the output data of the selected layer.

In an embodiment, a partial operation result array having a plurality of columns may be compressed into one column by performing point-to-point add operations on all partial operation results in each row of the partial operation result array, and then each partial operation result in the compressed partial operation result array may be provided to the next layer as one output data of the selected layer.

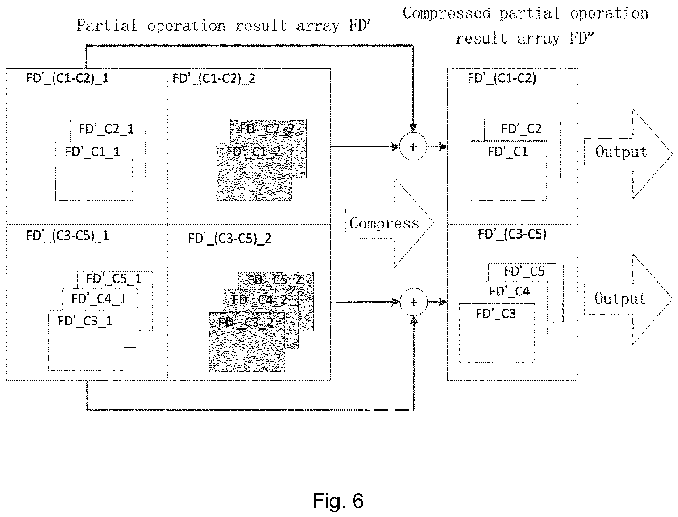

For example, as for the partial operation result array FD' in FIG. 5, as shown in FIG. 6, all the partial operation results (FD'_(C1-C2)_1 and FD'_(C1-C2)_2) in the first row of the partial operation result array FD' may be added in a point-to-point manner, and all the partial operation results (FD'_(C3-C5)_1, FD'_(C3-C5)_2) in the second row of the partial operation result array FD' may be added in a point-to-point manner, thereby generating a compressed partial operation result array FD". The compressed partial operation result array FD" comprises two rows and one column, in which the partial operation result FD'_(C1-C2) in the first row corresponds to the partial operation results in the channels C1 and C2, and the partial operation result FD'_(C3-C5) in the second row corresponds to the partial operation results in the channels C3 to C5. Then, the partial operation results FD'_(C1-C2) and FD'_(C3-C5) may be provided to the next layer as two output data.

Then, the method 100 may be applied again for the next layer. For example, as described above, in the step S101, responsive of receiving a plurality of partial input data, the weight parameter of this layer may be split according to each partial input data, such that an operational parameter array obtained by the splitting has a number of columns equal to the number of the plurality of partial input data received by this layer, and all the operational parameters in each column correspond to the same one or more channels as one of the plurality of partial input data received by this layer.

In some other embodiments, a partial operation result array comprising a plurality of rows may be compressed into one row by combining all the partial operation results in each column of the partial operation result array together in the depth direction, and then each partial operation result in the compressed partial operation result array may be provided respectively to the next layer as one output data of the selected layer.

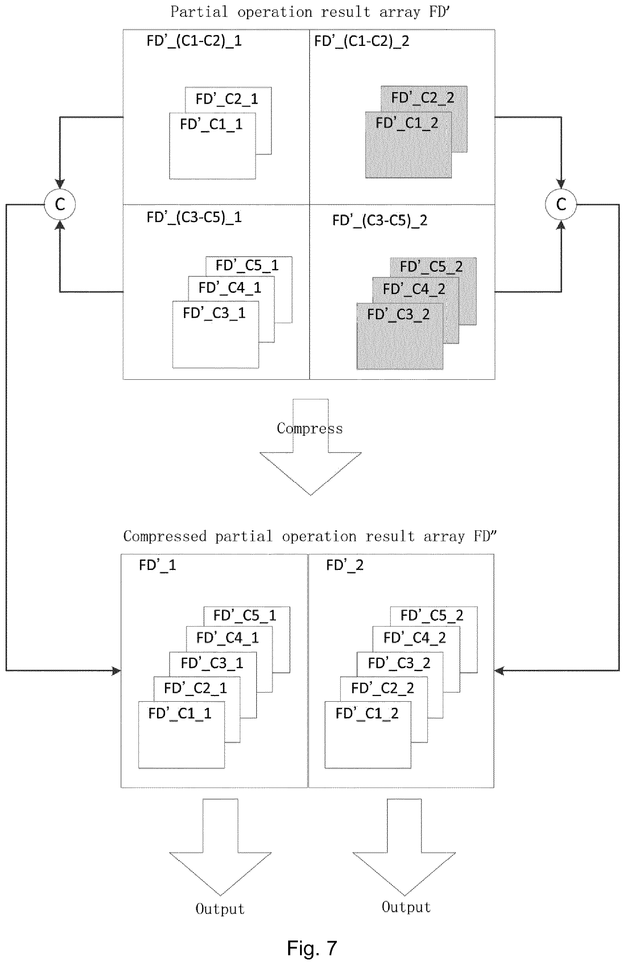

For example, as for the partial operation result array FD' in FIG. 5, as shown in FIG. 7, all the partial operation results (FD'_(C1-C2)_1 and FD'_(C3-C5)_1) in the first column of the partial operation result array FD' may have their respective channels combined together in the depth direction, and all the partial operation results (FD'_(C1-C2)_2 and FD'_(C3-C5)_2) in the first column of the partial operation result array FD' may have their respective channels combined together in the depth direction, thus generating a compressed partial operation result array FD". The compressed partial operation result array FD" comprises one row and two columns, in which the partial operation result FD'_1 in the first column and the partial operation result FD'_2 in the second column each have channels C1 to C5. Then, the partial operation results FD'_1 and FD'_2 may be provided to the next layer as two output data.

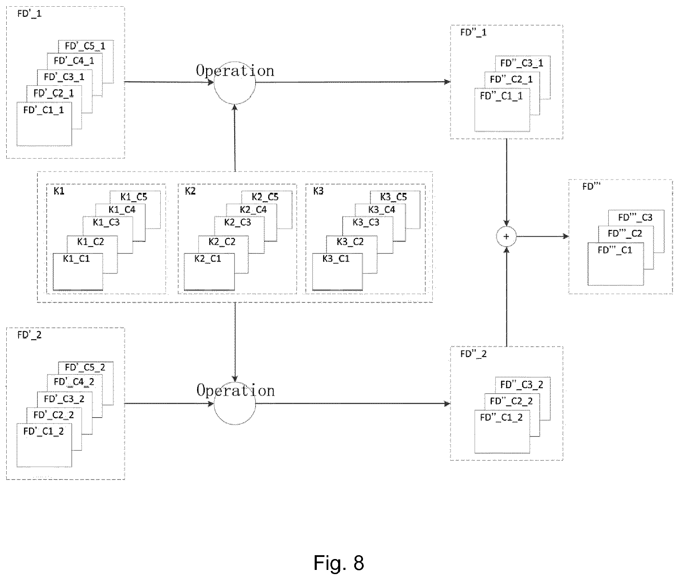

Then, in the next layer, for example, the weight parameter of this layer may be used to perform operations on each partial input data, and then results obtained by the operations may be added in a point-to-point manner. For example, as shown in FIG. 8, two partial input data FD'_1 and FD'_2 as shown in FIG. 7 are received at the next layer, and the weight parameter of the next layer has three kernels K1 to K3, each kernel including five channels C1 to C5. Then, the weight parameter may be used to perform operations on each of the partial input data FD'_1 and FD'_2 respectively so as to obtain two partial output data FD"_1 and FD"_2, and the two partial output data FD"_1 and FD"_2 may be added to each other in a point-to-point manner, eventually obtaining the output data FD'" of the next layer. In the example shown in FIG. 8, the two partial output data FD"_1 and FD"_2 may be directly provided to a yet next layer without the point-to-point add operation. In some other examples, the two partial input data received in the next layer may be added first in the point-to-point manner to obtain a complete input data, and then conventional operations may be performed on the complete input data, or operations may be performed by using methods according to embodiments of the present disclosure. In other examples, in the next layer, the methods according to embodiments of the present disclosure may be directly applied, and the weight parameter of the next layer may be firstly split.

In some other embodiments, for a partial operation result array containing a plurality of rows and a plurality of columns, an output data may be generated by point-to-point adding the partial operation results in each row of the partial operation result array and combining all the partial operation results in each column of the compressed partial operation result array together in the depth direction, or by combining all the partial operation results in each column of the partial operation result array together in the depth direction and point-to-point adding the partial operation results in each row of the compressed partial operation result array.

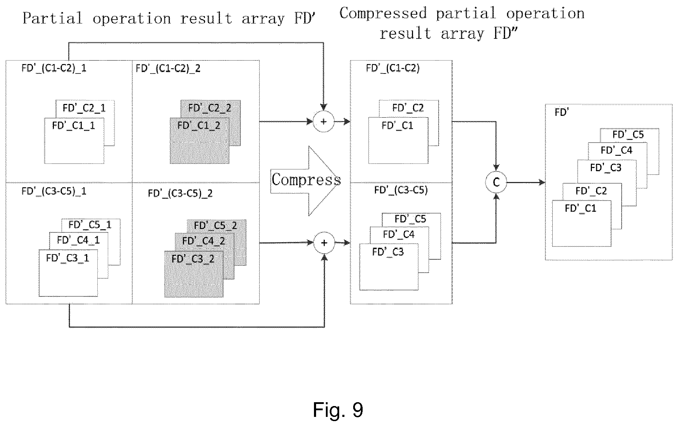

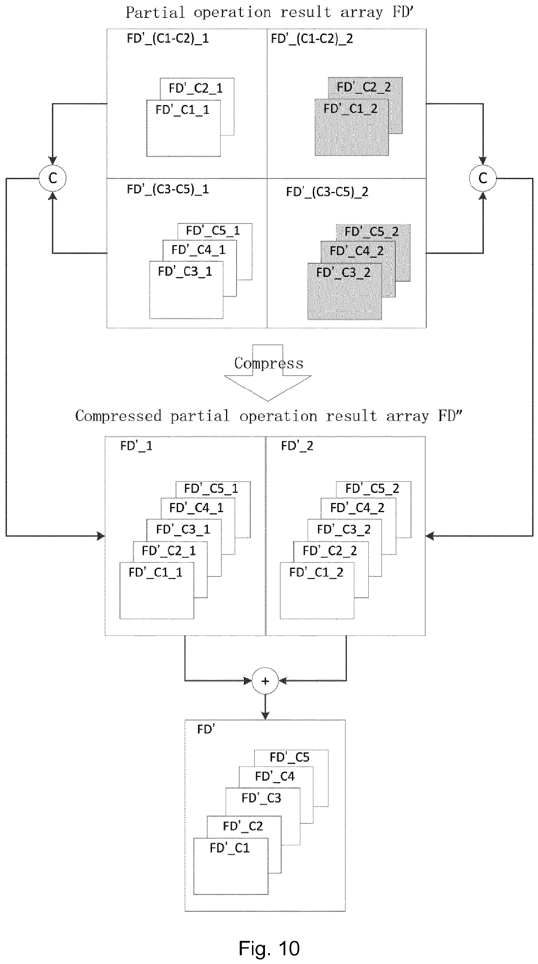

For example, the examples shown in FIG. 6 and FIG. 7 may be combined as shown in FIG. 9 or FIG. 10 so as to generate an output data FD'. It can be seen that the final output data are the same in the example shown in FIG. 9 as in the example shown in FIG.10.

In some other embodiments, the partial operation result array containing a plurality of rows and a plurality of columns may be compressed in rows and/or columns in a way similar to the compression methods as described above to obtain a partial operation result array having fewer rows and/or fewer columns, and then each partial operation result in the compressed partial operation result array may be respectively provided as an output data to the next layer.

**For** example, as for a partial operation result array having three rows and three columns, a partial operation result in the first row and the first column and a partial operation result in the first row and the second column may be added up in a point-to-point manner, resulting in a partial operation result array having three rows and two columns. Then, a partial operation result in the second row and the first column of the compressed partial operation result array and a partial operation result in the third row and the second column may have their respective channels combined together in the depth direction to obtain a yet smaller partial operation result array having two rows and two columns. Then, each partial operation result in the yet smaller partial operation result array having two rows and two columns may be provided to the next layer as an output data.

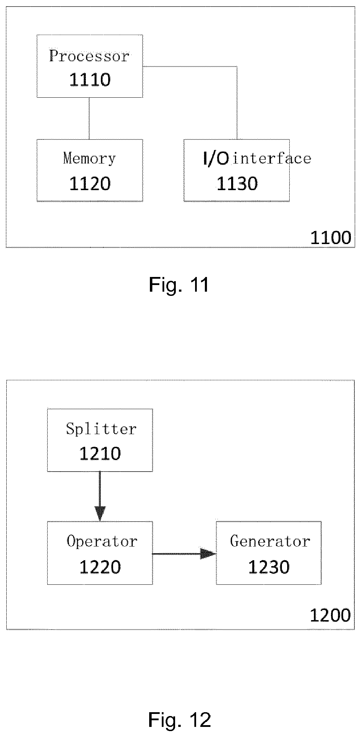

FIG. 11 and FIG. 12 show block diagrams of apparatuses for performing the above methods according to embodiments of the present disclosure.

As shown in FIG. 11, the exemplary apparatus 1100 may include one or more processors 1110. The processor 1110 may be any processing unit that is able to process data and/or execute instructions, such as a general CPU, GPU, or a neural network dedicated processor or accelerator. For example, the processor 1110 may perform the methods according to the embodiments of the present disclosure. In addition, the processor 1110 may also control other components in the apparatus 1100 to perform desired functions.

The processor 1110 may be connected to a memory 1120 and an I/O interface 1130 through a bus system and/or other interconnect mechanisms (not shown).

The memory 1120 may include a computer readable and writable storage medium in various forms, for example, a volatile memory and/or a non-volatile memory. The volatile memory may include, for example, a random access memory (RAM) and/or a cache, etc. The non-volatile memory may include, for example, a read only memory (ROM), a hard disk, a flash memory, etc. The readable and writable storage medium may include but is not limited to an electric, magnetic, optical, electromagnetic, infrared, or semiconductor system, apparatus, or device or any combination of the above. For example, in a case of being used together with a neural network dedicated processor, the memory 1120 may also be a RAM on a chip carrying the dedicated processor. The memory 1120 may include program instructions for instructing the device 1100 to perform the methods for adapting the feature data of the neural network according to the embodiments of the present disclosure.

The I/O interface 1130 may be configured to provide parameters or data to the processor 1110 and output the resulting data processed by the processor 1110.

Further, as shown in FIG. 12, the exemplary apparatus 1200 may include a splitter 1210, an operator 1220 and a generator 1230.

The splitter 1210 may be configured to split a weight parameter of a selected layer in the convolutional neural network in at least one of dimensions of depth and number of kernels so as to obtain an operational parameter array containing a plurality of operational parameters. All the operational parameters in each row of the operational parameter array are from a same subset of the set of kernels of the weight parameter and have different channels, and each operational parameter in each column is from a different subset of the set of kernels of the weight parameter and has the same one or more channels. In one embodiment, the splitter 1210 may be configured to perform, for example, the step S101 in the exemplary method 100.

The operator 1220 may be configured to perform operations of a selected layer on data in the input data for the selected layer that are in a channel(s) corresponding to the channel(s) of the operational parameter in use, using each operational parameter in the operational parameter array, so as to obtain a partial operation result array including a plurality of partial operation results. In one embodiment, the operator 1220 may be configured to perform, for example, the step S105 in the exemplary method 100.

The generator 1230 may be configured to generate one or more output data of the selected layer based on the partial operational result array. In one embodiment, the generator 1230 may be configured to perform, for example, the step S110 in the exemplary method 100.

It should be understood that the apparatus 1100 shown in FIG. 11 and the apparatus 1200 shown in FIG. 12 are only examples but not to limit scope of the present invention in any way. The apparatus according to the embodiment of the present disclosure may have other components and/or structures if needed.

By the method and/or apparatus according to the embodiments of the present disclosure, a convolution operations of a large parameter in the convolutional neural network may be split into several smaller convolution operations, and the results keep consistent before the splitting with after the splitting, which is beneficial to improve operation parallelism and/or execution efficiency. In addition, limitation of hardware (such as the dedicated hardware accelerator) may be avoided, and thus the hardware may be used for convolution operations of weight parameters with any size. In addition, by splitting a large weight parameter into several smaller weight parameters, the high-speed memory can be ensured to completely cache the weight parameter for each operation, thereby correctness of the operations may be ensured, and data transportation may be reduced, which are beneficial to improve execution efficiency of the hardware.

Unless otherwise required clearly in the context, throughout the description and claims, the wordings such as "comprise" and "include" are to be construed in an inclusive sense, as opposed to an exclusive or exhaustive sense, that is to say, in a sense of "including but not limited to". Additionally, when used in the disclosure, the wordings of "herein", "above", "below" and similar wordings shall refer to the disclosure as a whole but not to any specific portion of the disclosure. When being permitted in the context, the wordings in singular or plural used in the above descriptions may also include the plural or singular, respectively. The wording of "or" in reference to a list of two or more items covers all of the following interpretations of the wording: any of the items in the list, all of the items in the list, and any combination of the items in the list.

The above detailed description of the embodiments of the disclosure is not intended to be exhaustive or to limit the disclosure to a specific form disclosed above. Although specific embodiments and examples of the disclosure are described above for illustrative purposes, various equivalent modifications are possible within the scope of the disclosure, as appreciated by those skilled in the art. For example, although the processes or blocks are presented in a given order, alternative embodiments may execute a process including these steps in a different order or employ a system including these blocks in a different order, and some processes or blocks may be deleted, moved, added, subdivided, combined, and/or modified. Each of these processes or blocks may be implemented in a variety of different ways. Further, although the processes or blocks are shown sometimes as being executed in series, these processes or blocks may instead be executed in parallel, or may be executed at different times.

The teachings of the disclosure provided herein may be applied to other systems, but not necessarily the system described above. The elements and acts of the various embodiments described above may be combined to provide further embodiments.

Although some embodiments of the disclosure have been described, these embodiments have been presented by way of example only, but are not intended to limit the scope of the disclosure. Indeed, the novel methods and systems described herein may be embodied in a variety of other forms. Furthermore, various omissions, substitutions and changes in the form of the methods and systems described herein may be made without departing from the spirit of the disclosure.

## Claims

1. A method for performing operations in a convolutional neural network, comprising:
splitting a weight parameter of a selected layer in the convolutional neural network in at least one of dimension of depth and number of kernels to obtain an operational parameter array including a plurality of operational parameters, respective operational parameters in each row of the operational parameter array being from a same subset of a set of kernels of the weighted parameter and having different channels respectively, and respective operational parameters in each column of the operational parameter array being from different subsets of the set of kernels of the weight parameter respectively and having the same one or more channels;
performing, by using each operational parameter in the operational parameter array, operations of the selected layer on data of input data for the selected layer that are in the channel corresponding to the channel of the operational parameter that is in use, to obtain a partial operation result array including a plurality of partial operation results; and
generating one or more output data of the selected layer based on the partial operational result array.

2. The method of claim 1 wherein splitting the weight parameter comprises:
splitting the weight parameter in a case where a size of the weight parameter exceeds a first threshold, such that each operational parameter in the operational parameter array obtained by the splitting has a size less than or equal to the first threshold.

3. The method of claim 1 wherein splitting the weight parameter comprises:
splitting the weight parameter in a case where a number of kernels of the weight parameter exceeds a second threshold, such that each operational parameter in the operational parameter array obtained by the splitting has a number of kernels less than or equal to the second threshold.

4. The method of claim 1 wherein splitting the weight parameter comprises:
splitting the weight parameter in a case where the weight parameter has a number of kernels greater than or equal to a first predetermined number, such that the operational parameter array obtained by the splitting has a number of rows equal to a multiple of the first predetermined number.

5. The method of claim 1 wherein splitting the weight parameter comprises:
splitting the weight parameter in a case where the weight parameter has a number of channels exceeding a third threshold, such that each operational parameter in the operational parameter array obtained by the splitting has a number of channels less than or equal to the third threshold.

6. The method of claim 1 wherein splitting the weight parameter comprises:
splitting the weight parameter in a case where the weight parameter has a number of channels greater than or equal to a second predetermined number, such that the operational parameter array obtained by the splitting has a number of columns equal to a multiple of the second predetermined number.

7. The method of claim 1 wherein splitting the weight parameter comprises:
when the selected layer receives a plurality of partial input data, any two of which do not have the same channel, and the plurality of partial input data collectively correspond to a complete input data of the selected layer, then the weight parameter is split according to each partial input data such that the operational parameter array obtained by the splitting has a number of columns equal to the number of the received plurality of partial input data, and all the operational parameters in each column correspond to the same one or more channels as one of the plurality of partial input data.

8. The method of claim 1 wherein splitting the weight parameter further comprises:
subdividing at least a row and/or column of the operational parameter array in at least one of dimensions of depth and number of kernels when the row and/or column includes an operational parameter having a size exceeding a first threshold, such that each operational parameter in the operational parameter array obtained by the subdividing has a size less than or equal to the first threshold.

9. The method of claim 1 wherein each partial operation result in the partial operation result array corresponds to one output data of the selected layer.

10. The method of claim 1 where generating the output data comprises:
compressing the partial operation result array into one column by adding up all the partial operation results in each row of the partial operation result array in a point-to-point manner when the partial operation result array includes a plurality of columns, each partial operation result in the compressed partial operation result array corresponding to an output data of the selected layer.

11. The method of claim 1 wherein generating the output data comprises:
compressing the partial operation result array into one row by combining all the partial operation results in each column of the partial operation result array in the depth direction when the partial operation result array includes a plurality of rows, each partial operation result in the compressed partial operation result array corresponding to an output data of the selected layer.

12. The method of claim 1 wherein generating the output data comprises:
generating an output data of the selected layer by adding up all the partial operation results in each row of the partial operation result array in a point-to-point manner and then combining, in the depth direction, all the partial operation results in each column of the partial operation result array compressed by the adding up, or by combining all the partial operation results in each column of the partial operation result array in the depth direction and then adding up all the partial operation results in each row of the partial operation result array compressed by the combining in a point-to-point manner, when the partial operation result array includes a plurality of rows and a plurality of columns.

13. An apparatus for performing operations in a convolutional neural network, comprising:
one or more processors, and
a memory having instructions stored therein, the instructions, when executed by the one or more processors, causing the one or more processors to perform:
splitting a weight parameter of a selected layer in the convolutional neural network in at least one of dimension of depth and number of kernels to obtain an operational parameter array including a plurality of operational parameters, respective operational parameters in each row of the operational parameter array being from a same subset of a set of kernels of the weighted parameter and having different channels respectively, and respective operational parameters in each column of the operational parameter array being from different subsets of the set of kernels of the weight parameter respectively and having the same one or more channels;
performing, by using each operational parameter in the operational parameter array, operations of the selected layer on data of input data for the selected layer that are in the channel corresponding to the channel of the operational parameter that is in use, to obtain a partial operation result array including a plurality of partial operation results; and
generating one or more output data of the selected layer based on the partial operational result array.

14. An apparatus for performing operations in a convolutional neural network, comprising:
a splitter configured to split a weight parameter of a selected layer in the convolutional neural network in at least one of dimension of depth and number of kernels to obtain an operational parameter array including a plurality of operational parameters, respective operational parameters in each row of the operational parameter array being from a same subset of a set of kernels of the weighted parameter and having different channels respectively, and respective operational parameters in each column of the operational parameter array being from different subsets of the set of kernels of the weight parameter respectively and having the same one or more channels;
an operator configured to perform, by using each operational parameter in the operational parameter array, operations of the selected layer on data of input data for the selected layer that are in the channel corresponding to the channel of the operational parameter that is in use, to obtain a partial operation result array including a plurality of partial operation results; and
a generator configured to generate one or more output data of the selected layer based on the partial operational result array.

15. A non-temporary storage medium having instructions stored thereon, the instructions, when executed by a processor that is configured to perform operations in a convolutional neural network, causing the processor to perform:
splitting a weight parameter of a selected layer in the convolutional neural network in at least one of dimension of depth and number of kernels to obtain an operational parameter array including a plurality of operational parameters, respective operational parameters in each row of the operational parameter array being from a same subset of a set of kernels of the weighted parameter and having different channels respectively, and respective operational parameters in each column of the operational parameter array being from different subsets of the set of kernels of the weight parameter respectively and having the same one or more channels;
performing, by using each operational parameter in the operational parameter array, operations of the selected layer on data of input data for the selected layer that are in the channel corresponding to the channel of the operational parameter that is in use, to obtain a partial operation result array including a plurality of partial operation results; and
generating one or more output data of the selected layer based on the partial operational result array.
